# EUROPEAN PATENT APPLICATION

(11) **EP 4 238 714 A1**
(43) Date of publication of application: **06.09.2023**
(21) Application number: 22159752.9
(22) Date of filing: 02.03.2022
(51) Int. Cl.: B25J 9/16, G06N 20/00, G06T 7/70, G06V 10/774

(54) **DEVICE AND METHOD FOR CONTROLLING A ROBOT**

(71) Applicant: Robert Bosch GmbH, 70442 Stuttgart (DE)
(72) Inventor: Feldman, Yuri, 3508409 Haifa (IL); Shapiro, Yoel, 3508409 Haifa (IL); Kosman, Eitan, 3508409 Haifa (IL)

(57) **Abstract**

According to various embodiments, a method for generating training data for a machine-learning model is described comprising obtaining a plurality of depth images, degrading each generated depth image by at least one of replacing depth values at locations with a high depth gradient is above a predetermined gradient threshold by invalid depth values, replacing depth values at locations where an object shown in the depth image has a curvature above a predetermined curvature threshold by invalid depth values and replacing depth values of one or more polygonal patches of the depth image by random depth values or invalid depth values and generating, for each depth image, a training data element comprising the degraded generated depth image as training input data.

## Description

### Prior Art

The present disclosure relates to devices and methods for controlling a robot.

Depth measurements are a powerful modality in robotics tasks, enabling geometrical reasoning of a robot's environment and planning and automatic execution of tasks therein. Methods of robotic perception and decision making are based on learned models taking depth measurements as inputs. Such methods are notorious for being data-hungry, requiring many samples of training data to generalize well, i.e. to produce a solution that is useful in the real world. Many robotics tasks are amenable to simulation, which allows generating potentially unlimited amounts of training data. However, depth measurements obtained in such manner are "ideal" - failing to capture imperfections in the measurements obtained from depth sensors in the real world, which may prevent machine learning methods trained on simulated depth to generalize well to be useful at all in the real world.

According to the requirement for large amounts of training data on the one hand and the above shortcoming of simulated depth on the other hand, approaches are desirable which allow generating image training data (in particular depth image training data) from simulation that match the characteristics (e.g. deficiencies) of (depth) measurements expected in the real world.

### Disclosure of the Invention

According to various embodiments, a method for generating training data for a machine-learning model is provided comprising obtaining a plurality of depth images, degrading each generated depth image by at least one of
- Replacing depth values at locations with a high depth gradient is above a predetermined gradient threshold by invalid depth values;
- Replacing depth values at locations where an object shown in the depth image has a curvature above a predetermined curvature threshold by invalid depth values; and
- Replacing depth values of one or more polygonal patches of the depth image by random depth values or invalid depth values; and

Generating, for each depth image, a training data element comprising the degraded generated depth image as training input data.

The method described above allows the generation of training data for a machine-learning model processing depth input data (e.g. among other input data) which corresponds well to real-world data (i.e. data acquired by real image sensors) and thus allows a training of the machine-learning model such that it performs well on real-world data. The plurality of depth images may be synthetically generated but the degradation may also be applied to real-world training data, i.e. a customized augmentation for the depth channel of RGBD images may be used.

Specifically, the degradation procedures based on gradient, curvature and polygonal patches allows taking into account poor quality of real-world depth data for surfaces which are strongly inclined with respect to the camera (high gradient), for thin structures (high curvature) and for regions with reflections (which typically in continuous regions rather than discrete points).

In the following, various examples are given.

Example 1 is the method for generating training data for a machine-learning model as described above.

Example 2 is the method of Example 1, further comprising generating the depth image by replacing depth values according to a projection pattern by random depth values or invalid depth values.

This degradation procedure takes into account effects that occur for real-world depth images for specific camera types.

Example 3 is the method of Example 1 or 2, comprising degrading each generated depth image by all of replacing depth values at locations with a high depth gradient is above a predetermined gradient threshold by invalid depth values, replacing depth values at locations where an object shown in the depth image has a curvature above a predetermined curvature threshold by invalid depth values and replacing depth values of one or more polygonal patches of the depth image by random depth values or invalid depth values.

Applying all degradation procedures takes into account a lot of effects that occur in real-world depth images.

Example 4 is a method for controlling a robot device comprising generating training data according to any one of Examples 1 to 3, training the machine-learning model using the generated training data elements, acquiring one or more depth images of a control scenario in which the robot device is to be controlled, supplying input data comprising the one or more depth images to the trained machine-learning model and controlling the robot device using an output provided by the trained machine learning model in response to the input data.

Since the training data generated according to the method described above allows training the machine-learning model to provided accurate results in real-world applications (i.e. processing real sensor data) the robot device can be reliably controlled in real-world applications.

Example 5 is the method of Example 4, comprising training the machine learning model for at least one of object segmentation, object detection, classification, depth completion and action recognition.

In these contexts, a high amount of training data may be synthetically generated which reflects real-world measurements and leads to high performance of the trained machine-learning model.

Example 6 is a (e.g. robot) controller, configured to perform a method of any one of Example 1 to 5.

Example 7 is a computer program comprising instructions which, when executed by a computer, makes the computer perform a method according to any one of Examples 1 to 6.

Example 8 is a computer-readable medium comprising instructions which, when executed by a computer, makes the computer perform a method according to any one of Examples 1 to 7.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a robot.
- Figure 2: shows a diagram illustrating a data flow according to various embodiments.
- Figure 3: shows an example of a simulated greyscale frame, a corresponding simulated depth frame and a corresponding degraded depth frame generated according to an embodiment.
- Figure 4: shows a flow diagram illustrating a method for generating training data for a machine-learning model according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

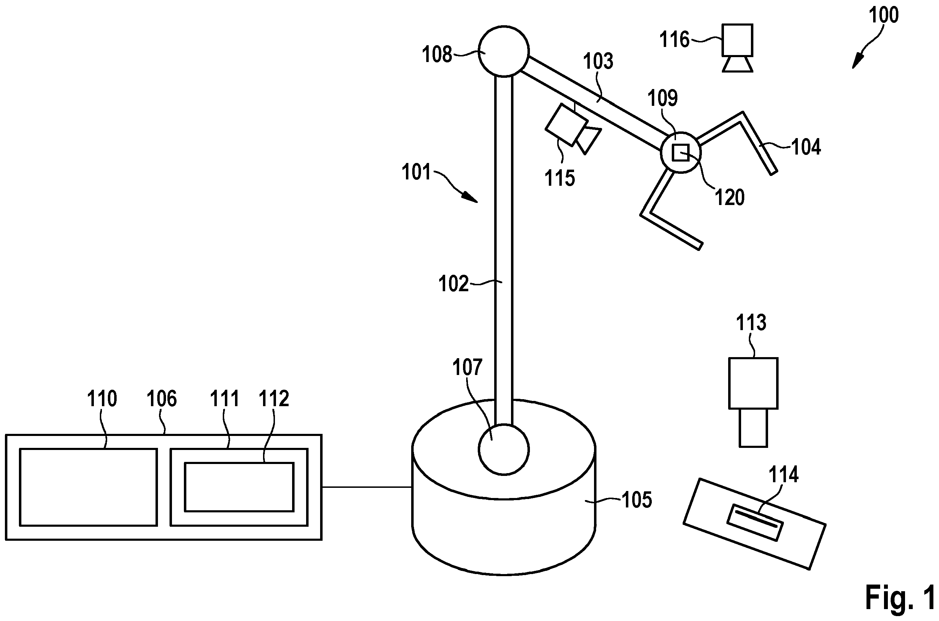

Figure 1 shows a robot 100.

The robot 100 includes a robot arm 101, for example an industrial robot arm for handling or assembling a work piece (or one or more other objects). The robot arm 101 includes manipulators 102, 103, 104 and a base (or support) 105 by which the manipulators 102, 103, 104 are supported. The term "manipulator" refers to the movable members of the robot arm 101, the actuation of which enables physical interaction with the environment, e.g. to carry out a task. For control, the robot 100 includes a (robot) controller 106 configured to implement the interaction with the environment according to a control program. The last member 104 (furthest from the support 105) of the manipulators 102, 103, 104 is also referred to as the end-effector 104 and may include one or more tools such as a welding torch, gripping instrument, painting equipment, or the like.

The other manipulators 102, 103 (closer to the support 105) may form a positioning device such that, together with the end-effector 104, the robot arm 101 with the end-effector 104 at its end is provided. The robot arm 101 is a mechanical arm that can provide similar functions as a human arm (possibly with a tool at its end).

The robot arm 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 includes one or more processors 110 and a memory 111 storing code and data according to which the processor 110 controls the robot arm 101. According to various embodiments, the controller 106 controls the robot arm 101 on the basis of a machine learning model 112 stored in the memory 111.

The robot is for example provided to perform an inserting (e.g. peg-in-hole) task, for example inserting a plug 113 in a corresponding socket 114. Tasks like this may be performed based on image data. For example the controller 106 takes pictures (images) of the plug 113 and socket 114 by means of cameras 115, 116, processes the acquired image data by the machine learning model 112 and controls the robot arm 101 according to the machine learning model's output. According to various embodiments, the image data includes colour and depth information, e.g. in the form of RGBD (red green blue depth) images (for example at least one camera 115, 116 is a colour image camera and at least one camera 115, 116 is a depth camera).

The processing task of the machine learning model 112 for example includes object segmentation, object detection, classification, and depth completion. The controller may for example use the result of such a processing task to identify and/or locate the object 113, determine the object's pose and/or a grasp location and/or grasp pose, detect obstacles (this in particular applies to the case that the robot device is a vehicle) etc.

For being able to perform a corresponding processing task, the machine learning model 112 is trained before its outputs are used for robot control. The training may be performed by the controller itself or may be performed on a separate device (a computer) from which the trained machine learning model 112 is transferred into the memory 111 (e.g. by transferring the values of neural network weights).

The training is performed using training data including, for the present cases, training image data, e.g. training RGBD images (and/or, for example in an autonomous driving application, LiDAR images).

Since a high amount of training data may be necessary to train the machine learning model 112 to perform well, synthetic training image data is generated and used for training according to various embodiments since this can be more easily be obtained in high amounts than real-world image data.

In this context, there is the issue of the so-called domain gap. For example, when the training image data includes depth data, training using synthetic image data may lead to poor results since synthetic depth maps (i.e. depth images) are typically perfect (in terms of being complete and correct), but in reality, depth cameras have many issues such as holes and incorrect depth values (i.e. having large errors). This gap lowers the usefulness of synthetic depth map, i.e. models might train and test well on synthetic data, but then fail on similar real-world test data.

This issue may be addressed by modifications (e.g. degradation) of synthetic image data. Approaches for this include heuristic, conditioned-generative and 3D optical simulation based approaches.

Heuristic approaches typically apply probabilistic and/or deterministic modifications to the depth input, such as introducing holes (invalid values) or corrupting depth values to simulate noise and acquisition errors. These methods usually use geometric properties of the RGBD input (e.g. edges, surface normal direction) as a prior for conditioning their modifications, and localize them correctly, i.e. similar to real-world observations. They are typically controllable, fast and data efficient but require manual tuning and are approximative only.

In conditioned-generative approaches, models for style-transfer or image generation (e.g. a GAN (generative-adversarial network) or a VAE (variational autoencoder) can learn to generate real-like depth maps. They need to be conditioned on the synthetic depth and/or synthetic RGB, to ensure that the fake depth map matches the synthetic/fake RGB map. This approaches are learnable and have fast inference times but are data hungry, have long training times, have training stabilization challenges (difficult to control) and typically low generalization.

In 3D optical simulation-based approaches software for 3D modelling and rendering can take into account scene geometry, material properties (transparency, reflectivity), lighting and other environment parameters, and then calculate what the camera sensor sees (e.g. with ray-tracing). Customized solutions can take into account additional sensor parameters (e.g. sensitivity, noise) and depth reconstruction algorithms, to simulate depth acquisition with high fidelity. These approaches are explainable and controllable but have high computation demands, require high development effort (e.g. require 3D design expertise) and are sensitive to correct characterization of scene (and camera) parameters.

According to various embodiments, an approach is used which can be seen as a heuristic approach. According to various embodiments, it includes a specialized set of image augmentations for training computer vision models on synthetic RGBD data. These augmentations are customized to mimic phenomena that occur during real-world depth acquisition, namely with depth cameras. Applying these augmentations during training greatly enhances model performance.

Specifically, according to various embodiments, a set of light-weight heuristic degradation procedures (i.e. depth modifications) for synthetic depth maps are used. These depth modifications improve the training of downstream machine-learning (i.e. artificial intelligence) models. Post-processing synthetic depth maps with the modifications reduces the synthetic-real domain gap and improves generalization of the trained machine learning models. In particular, when training computer-vision models in this manner, better test scores on real-world data can be observed.

A human operator can tune the depth modifications to mimic imperfections of real-world depth acquisition under a given setup including camera type (e.g. of cameras 115, 116), object material properties (e.g. of plug 113 and socket 114), lighting, etc. An advantage of Human-In-the-Loop (HIL) is that a person can reach a reasonable configuration quickly, from very few images, e.g. as little as a single image from each domain (i.e. synthetic and real-world domain).

The modifications can also be thought of as augmentations and tuned with automatic optimization tools for hyper-parameter tuning. The quantitative feedback metrics could be diverse: test scores of downstream model, image similarity scores (e.g. SSIM, ISSM), feature similarity scores (e.g. FID (Frechet Inception Distance), FSIM (feature similarity)), image quality (e.g. UIQ(universal image quality)), or other.

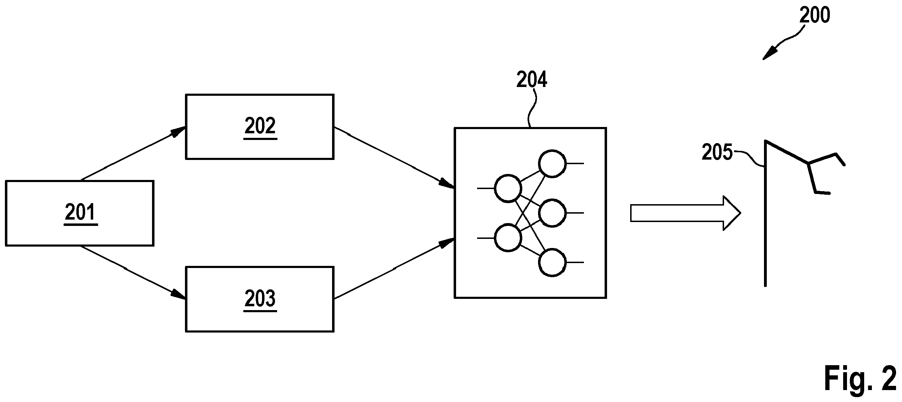

Figure 2 shows a diagram 200 illustrating a data flow according to various embodiments.

For training a machine learning model 204 (e.g. a neural network, for example corresponding to machine-learning model 112), a simulator 201 produces realistic RGB and perfect depth data (representing depth measurements) of a target (training) scene. The simulator 201 is implemented by a training data generation system which may or may not be the device training the machine-learning model. The training data generation system then applies depth (modification) processing 202 to the synthetic depth data resulting in degraded or sparsified depth data, e.g. in form of a depth map or image). The training data generation system may also pass the RGB data through a RGB processing 203. The results of the depth data processing 202 and the RGB processing 203 are supplied to the machine-learning model 204 for training. The training may be supervised or non-supervised training. For supervised training, the training elements comprising the degraded depth data (and possibly further input data like the RGB images which may or may not be degraded by the RGB processing 203) may be supplemented with ground truth labels according to the processing task for which the machine-learning model 204 is to be trained. The output of the machine-learning model 204 in response to real-world sensor data after training may then be used to control a robot 205 (e.g. corresponding to robot arm 101).

The depth data processing includes processing that may be seen as depth data degradation which, however, leads to depth data which better corresponds to real-world data (since real-world data, i.e. data acquired by image sensors, is also not perfect).

According to various embodiments, the depth data processing includes one or more of the following depth degradation procedures:
1. Calculation of spatial gradient magnitudes of the depth measurements (in addition to gradients in RGB). The magnitude of the spatial gradient at a position of the surface of an object reflects the angle of the surface normal to the camera view axis. The depth degradation procedure includes comparing the spatial gradient with a gradient threshold and performing a drop-out of depth image pixels in the vicinity of large gradient magnitudes (i.e. above the gradient threshold). This is motivated by two properties of stereo depth acquisition: occlusions and the fact that an area of an object which is close to perpendicular to the camera, where a projected pattern is often severely distorted or weakly reflected, is hard to match (for depth calculation). For example, the threshold could be tuned to a geometric angle, such as surfaces tilted from camera plane by more than 45degrees (this requires camera parameters and some computations).
2. Calculation of local curvature of an object shown in a depth image and performing a drop-out of pixels with high curvature values (i.e. above a curvature threshold). The curvature is the derivative of the gradient. Removing depth values for high curvature reflects the fact that areas objects that are very thin have high curvature and may be missed by real-world measurements. Again, with camera parameters and some calculations, curvature can be translated into mm. For example, features may be degraded when the bending radius is below 5 mm.
3. Performing a drop-out of depth values in random polygonal patches. This corresponds to real image patches where depth cannot be correctly computed, for example due to reflections (depending on specularities), transparency or translucency, or due to material that does not reflect enough of the pattern towards the respective image sensor.
4. Adding false depth values in random polygonal patches. This corresponds to the observation that due to reflections (depending on specularities) errors may increase or decrease the actual depth values in real-world measurements.
5. Emulation of sparsity in depth measurements due to a projection pattern, e.g. horizontal lines, by randomly dropping pixels according to a probabilistic pattern, then re-projecting the removed pixel mask for a sampled camera orientation. For example, degradation due to a projection pattern is simulated. Afterwards, it is slightly distorted with a projection matrix to account for camera alignment, e.g. the tilt between camera and floor.

The above depth degradation procedures may be used in conjunction with other (e.g. conventional) modifications like spatial shifts, noise, random sampling, condition sampling, introduction of holes, corrupting depth values etc.

Dropping out a depth value (i.e. a pixel value of a depth image) means replacing the depth value by an invalid value (e.g. zero or NaN (not a number)).

According to various embodiments, the training data generation system applies each of one or more of the above degradation procedures in the depth processing 202 independently on a depth frame (image) obtained from the simulator 201, yielding a mask of depth pixels to be kept (for the respective degradation procedure). The masks of the one or more degradation procedures are then combined by keeping only pixels of the depth frame belonging to all of the masks, and setting the rest of the depth pixels to an invalid value - zero or NaN (not a number). The training data generation system may do this for all or at least some of the depth images provided by the simulator 201. It may also vary the degradation procedures that it applies to the different depth images.

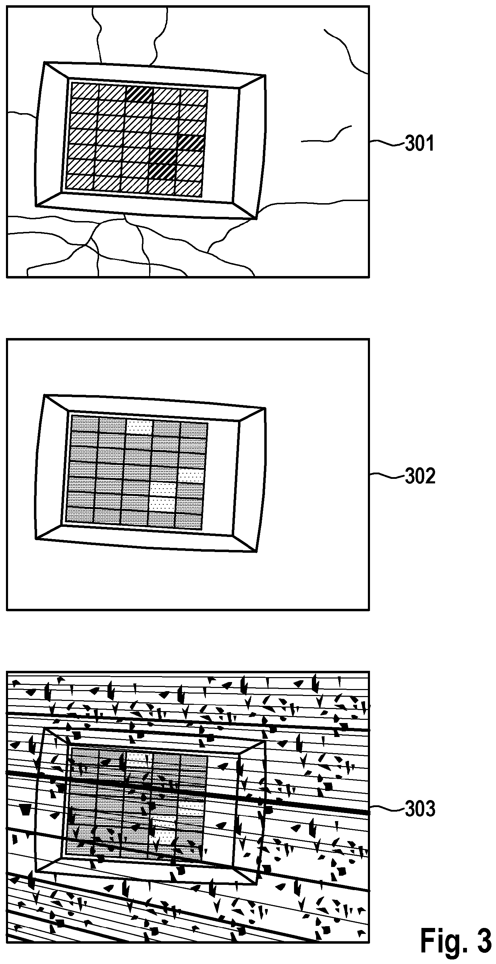

Figure 3 shows an example of a simulated greyscale frame 301, a corresponding simulated (clean) depth frame 302 (provided by the simulator 201) and a corresponding degraded depth frame 303 generated from the simulated depth frame by the depth processing 202.

According to various embodiments, the generation of synthetic training image data using the degradation procedures described above provides
- Richness since it covers many aspects of the depth maps. This enables mimicking many types and aspects of acquisition setups.
- Fast training data generation, in particular in comparison with conditioned-generative approaches and 3D optical simulation-based approaches. The degradation procedures include operations that may be carried out fast such as image filtering, thresholding, histogram calculations, and morphological operations.
- Explainability: the degradation procedures include operations consist of relatively simple (few steps), well understood mathematical operations. Most of them target regions with intuitive geometric properties: flatness, perpendicularity, edges, curvature.
- Controllability: each degradation procedure has a small set of easily comprehensible configuration parameters, for example: enable/disable, size, thickness, probability/quantile, and threshold angle.
- Data efficiency: a human operator can tune the depth processing 202 (and the degradation procedures included) with very few example images, even a single image at the extreme.
- Effectiveness: as opposed to unmodified synthetic depth maps, the depth images resulting from the degradation processing 202 resemble depth images obtained in the real-world. They therefore allow improved training. Moreover, training on synthetic data generated by the degradation processing 202 can even outperform training on real-world data, given sufficient amounts of high-quality synthetic data.

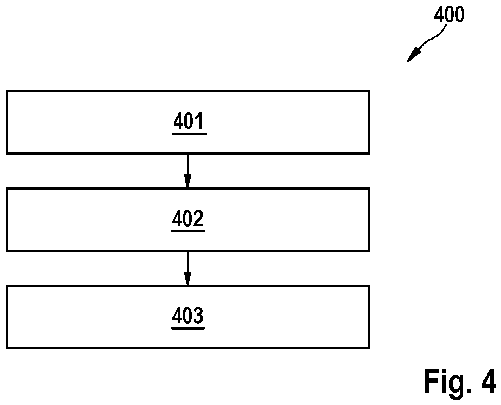

In summary, according to various embodiments, a method is provided as illustrated in figure 4.

Figure 4 shows a flow diagram 400 illustrating a method for generating training data for a machine-learning model.

In 401, a plurality of depth images is obtained (e.g. synthetically generated).

In 402, each generated depth image is degraded by at least one of
- replacing depth values at locations with a high depth gradient is above a predetermined gradient threshold by invalid depth values;
- replacing depth values at locations where an object shown in the depth image has a curvature above a predetermined curvature threshold by invalid depth values; and
- replacing depth values of one or more polygonal patches of the depth image by random depth values or invalid depth values.

In 403 and a training data element comprising the degraded generated depth image as training input data (for the machine-learning model) is generated for each depth image.

The approach of figure 4 can be used to train a machine-learning model for controlling a technical system, like e.g. a computer-controlled machine, like a robot, a vehicle, a domestic appliance, a power tool, a manufacturing machine, a personal assistant or an access control system. According to various embodiments, a policy for controlling the technical system may be learnt and then the technical system may be operated accordingly.

Various embodiments may (synthetically) generate and use image data (i.e. digital images) from various visual sensors (cameras) such as video, radar, LiDAR, ultrasonic, thermal imaging, motion, sonar etc., for example for the input (in particular training input) of a machine learning model.

Image data of these types may be generate for training machine-learning models (in particular computer vision models), e.g. for depth completion, depth estimation, object classification, object detection, object segmentation and action recognition. Such a model may then be used for controlling a robot device by processing image sensor data (e.g. acquired by the robot device or associated image sensors).

According to one embodiment, the method is computer-implemented.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A method for generating training data for a machine-learning model comprising:
Obtaining a plurality of depth images;
Degrading each generated depth image by at least one of
Replacing depth values at locations with a high depth gradient is above a predetermined gradient threshold by invalid depth values;
Replacing depth values at locations where an object shown in the depth image has a curvature above a predetermined curvature threshold by invalid depth values; and
Replacing depth values of one or more polygonal patches of the depth image by random depth values or invalid depth values; and
Generating, for each depth image, a training data element comprising the degraded generated depth image as training input data.

2. The method of claim 1, further comprising generating the depth image by replacing depth values according to a projection pattern by random depth values or invalid depth values.

3. The method of claim 1 or 2, comprising degrading each generated depth image by all of
Replacing depth values at locations with a high depth gradient is above a predetermined gradient threshold by invalid depth values;
Replacing depth values at locations where an object shown in the depth image has a curvature above a predetermined curvature threshold by invalid depth values; and
Replacing depth values of one or more polygonal patches of the depth image by random depth values or invalid depth values.

4. A method for controlling a robot device comprising:
generating training data according to any one of claims 1 to 3,
training the machine-learning model using the generated training data elements, acquiring one or more depth images of a control scenario in which the robot device is to be controlled;
supplying input data comprising the one or more depth images to the trained machine-learning model; and
controlling the robot device using an output provided by the trained machine learning model in response to the input data.

5. The method of claim 4, comprising training the machine learning model for at least one of object segmentation, object detection, classification, depth completion and action recognition.

6. A controller, configured to perform a method of any one of claims 1 to 5.

7. A computer program comprising instructions which, when executed by a computer, makes the computer perform a method according to any one of claims 1 to 6.

8. A computer-readable medium comprising instructions which, when executed by a computer, makes the computer perform a method according to any one of claims 1 to 7.

## Amended claims

### Amended claims in accordance with Rule 137(2) EPC.

1. A method for generating training data for a machine-learning model (112, 204) comprising:
Generating a plurality of depth images;
Degrading each generated depth image by replacing depth values at locations where an object shown in the depth image has a curvature above a predetermined curvature threshold by invalid depth values; and
Generating, for each depth image, a training data element comprising the degraded generated depth image (303) as training input data.

2. The method of claim 1, further comprising degrading the depth image by replacing depth values by random depth values or invalid depth values according to a degradation of real images due to a projection pattern.

3. The method of claim 1 or 2, comprising degrading each generated depth image by all of
Replacing depth values at locations with a depth gradient above a predetermined gradient threshold by invalid depth values; Replacing depth values at locations where an object shown in the depth image has a curvature above a predetermined curvature threshold by invalid depth values; and
Replacing depth values of one or more polygonal patches of the depth image by random depth values or invalid depth values.

4. A method for controlling a robot device (101, 205) comprising:
generating training data according to any one of claims 1 to 3,
training the machine-learning model (112, 204) using the generated training data elements, acquiring one or more depth images of a control scenario in which the robot device (101, 205) is to be controlled;
supplying input data comprising the one or more depth images to the trained machine-learning model (112, 204); and
controlling the robot device (101, 205) using an output provided by the trained machine learning model (112, 204) in response to the input data.

5. The method of claim 4, comprising training the machine learning model (112, 204) for at least one of object segmentation, object detection, classification, depth completion and action recognition.

6. A controller, configured to perform a method of any one of claims 1 to 5.

7. A computer program comprising instructions which, when executed by a computer, makes the computer perform a method according to any one of claims 1 to 5.

8. A computer-readable medium comprising instructions which, when executed by a computer, makes the computer perform a method according to any one of claims 1 to 5.
